# FASCICULE DE BREVET EUROPEEN

(11) **EP 0 419 746 B1**
(45) Date de publication et mention de la délivrance du brevet: **06.10.1993**
(21) Numéro de dépôt: 89402682.2
(22) Date de dépôt: 29.09.1989
(51) Int. Cl.: B29C 33/36, C03B 23/035

(54) **Four annulaire à sole tournante pour conformer à un profil voulu l'une des faces d'ébauches de lentilles optiques par affaissement thermique et application de vide**
Ringförmiger Ofen mit sich drehendem Boden, um die eine Seite des Linsenrohlings durch Wärmebehandlung an ein gewolltes Profil anzupassen und Anwendung von Vakuum
Annular oven on a turning base for one of the faces of a form for optical lenses to conform by thermal treatment and application of a vacuum

(43) Date de publication de la demande: 03.04.1991
(73) Titulaire: PIEZO CERAM ELECTRONIQUE, 84300 Cavaillon (FR)
(72) Inventeur: Bollier, Jean François, F-84000 Avignon (FR); Boumendil, Jean-Jacques, F-06480 La Colle sur Loup (FR)
(74) Mandataire: Colas, Jean-Pierre

(56) Documents cités:
- EP-A- 0 182 638
- WO-A-80/00336
- FR-A- 2 085 464
- US-A- 2 879 628
- US-A- 3 161 912
- US-A- 4 139 677
- US-A- 4 221 580
- US-A- 4 297 118

## Description

L'invention concerne un four continu à sole tournante pour conformer à un profil voulu l'une des faces d'ébauches de lentilles optiques par affaissement thermique et application de vide.

Il est connu de produire des ébauches de lentilles optiques, notamment de lentilles progressives, par affaissement thermique et application de vide à la partie inférieure d'ébauches auxquelles on fait traverser un four à profil de température adéquat, ces ébauches étant disposées sur des gabarits poreux convenablement profilés qui reposent eux-mêmes sur des supports appelés "tulipes" reliés à une source de vide. On obtient ainsi des ébauches de lentilles optiques dont l'une des faces est convenablement profilée.

Les types de four disponibles à ce jour pour la conformation de l'une des faces d'ébauches de lentilles optiques sont tous des fours fonctionnant en mode discontinu, car on n'a pas pu, à ce jour, réaliser un four capable de fonctionner en mode continu, du fait des problèmes posés par l'application du vide.

Il serait pourtant désirable, pour améliorer la productivité et réduire les coûts de fabrication des ébauches de lentilles, de disposer d'un équipement capable de fonctionner en mode continu.

La présente invention vise à résoudre ce problème.

L'objet de l'invention est donc de fournir un four continu pour conformer à un profil voulu l'une des faces d'ébauches de lentilles optiques par affaissement thermique de ces ébauches sur des gabarits convenablement profilés sous l'action concomitante d'un vide.

Plus particulièrement, l'invention concerne un four continu pour conformer à un profil voulu l'une des faces d'ébauches de lentilles optiques par affaissement thermique de ces ébauches sur des gabarits convenablement profilés sous l'action concomitante d'un vide, qui comprend :
- un bâti fixe,
- une sole tournante de forme générale annulaire formée d'une pluralité de sections successives, chaque section étant pourvue d'une pluralité de supports, en forme de tulipes, destinés à supporter les gabarits,
- un tunnel fixe recouvrant la sole sur une partie de sa longueur et comprenant au moins une zone de chauffage des ébauches à une température causant leur ramollissement et au moins une zone de refroidissement des ébauches conformées sur une de leurs faces, la partie de la sole non recouverte par le tunnel constituant des postes de chargement du four en ébauches à conformer et de déchargement des ébauches conformées sur une de leurs faces,
- des moyens d'entraînement de la sole en rotation,
- une source de vide entraînée en rotation avec la sole, et
- des moyens permettant de relier les supports tulipés d'une section de la sole à la source de vide lorsque cette section arrive en une première position prédéterminée de la zone de chauffage, puis de connecter lesdits supports tulipés à l'air ambiant lorsque ladite section arrive en une deuxième position prédéterminée de la zone de chauffage.

Selon un mode de réalisation particulier, les moyens permettant de relier les supports tulipés d'une section de la sole à la source de vide lorsque cette section arrive en une première position prédéterminée de la zone de chauffage puis de connecter lesdits supports tulipés à l'air ambiant lorsque ladite section arrive en une deuxième portion prédéterminée de la zone de chauffage comprennent un conduit muni d'un distributeur permettant de mettre les supports tulipés en communication soit avec la source de vide, soit avec l'air ambiant, des moyens de commande dudit distributeur, et des moyens formant came d'actionnement de ces moyens de commande, et la source de vide comprend une pompe à vide et un réservoir de vide.

La description qui va suivre, faite en se référant aux dessins annexés fera bien comprendre l'invention.
La figure 1 est une vue de dessus, avec arrachements, d'un four selon l'invention.
La figure 2 est une vue en perspective montrant les postes de déchargement-chargement du four de la figure 1.
La figure 3 est une vue en section transversale selon la ligne III-III de la figure 1, et
La figure 4 est une vue en perspective arrachée illustrant plus particulièrement le système de mise sous vide des supports tulipés de ce four.

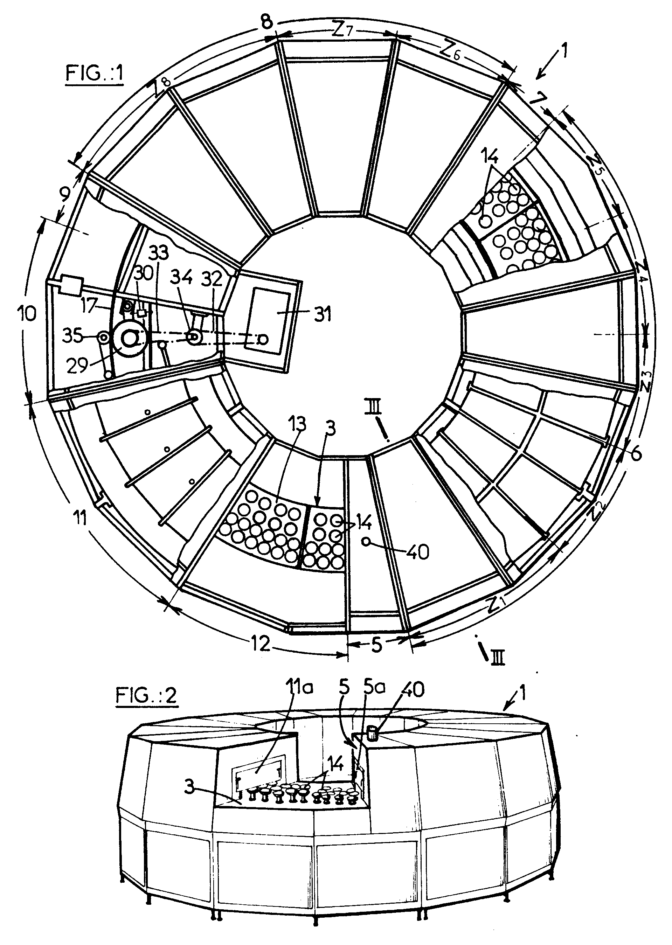

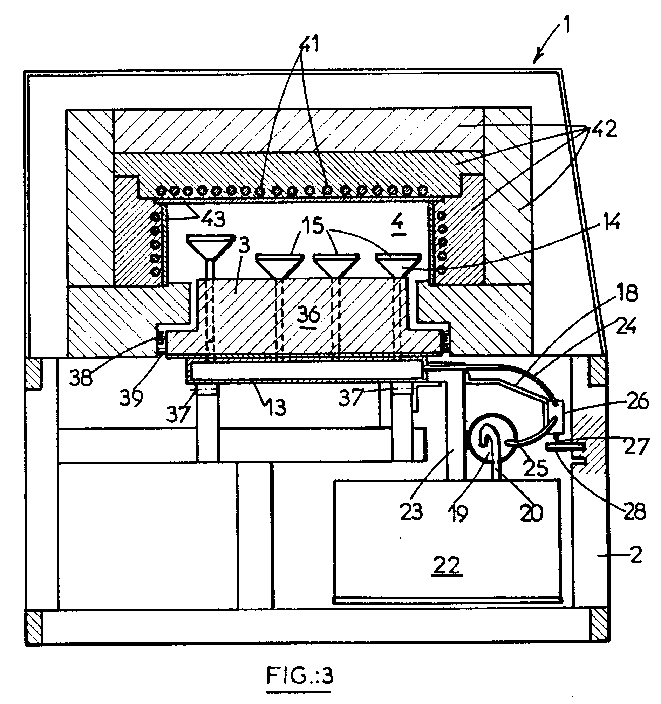

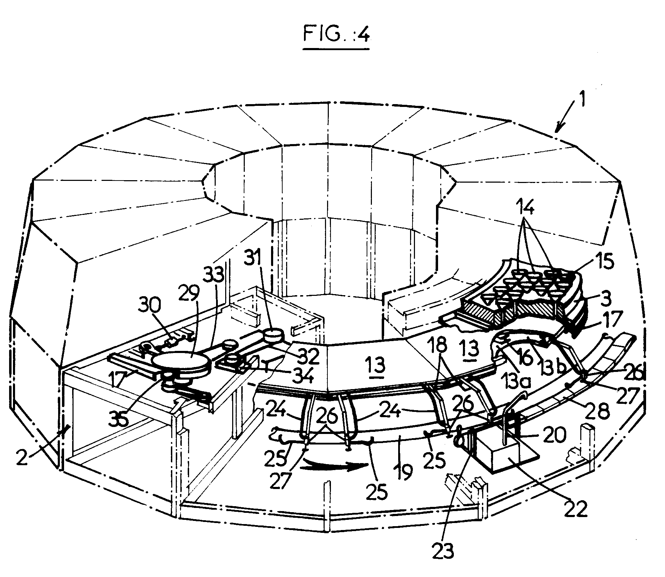

Sur les figures 1-4, est représenté un four annulaire continu selon l'invention, désigné par la référence générale 1, qui comprend un bâti fixe 2, une sole annulaire tournante 3, et un tunnel fixe 4 recouvrant la sole sur une grande partie de sa circonférence, ce tunnel comportant une section d'entrée 5 munie d'un volet 5a limitant le passage de l'air, une première zone de chauffage 6, une zone de discontinuité thermique 7, une deuxième zone de chauffage 8, une zone morte 9, une zone de refroidissement par chemise d'air 10, et une zone de refroidissement par chemise d'eau 11 comportant à sa sortie un volet 11a limitant le passage de l'air. La partie de la sole non recouverte par le tunnel constitue un poste 12 de déchargement-chargement du four.

La sole 3 est formée, par exemple de 16 caissons métalliques étanches 13 adjacents sur chacun desquels est montée, par exemple 20 supports creux tulipés 14, par exemple en acier réfractaire, communiquant avec l'intérieur du caisson qui les supporte et destinés à recevoir des gabarits profilés, tels que 15, sur lesquels on disposera les ébauches de lentilles optiques à traiter. Chaque caisson est divisé intérieurement en deux demi-caissons étanches 13a et 13b par une poutre, telle que 16, de raidissement.

La sole 3 est munie d'un rail latéral vertical 17 faisant office de chemin de roulement et servant à l'entraînement en rotation de la sole comme expliqué plus loin.

Solidarisé à la sole 3 par des bras 18 se trouve un tube 19, faisant office de réservoir de vide, qui est lui-même raccordé, par un conduit 20, à une pompe à vide à palettes 22 supportée par un berceau 23 fixé audit tube 19. Chaque demi-caisson de la sole est, de son côté, raccordé au tube 19 par des conduits 24 et 25, via un distributeur pneumatique 26 actionné par un capteur 27 à roulette permettant de connecter le demi-caisson, selon que le capteur 27 se trouve en position basse ou haute, soit à l'air ambiant, soit au tube 19 faisant office de réservoir de vide, respectivement. A cet effet, il est prévu, le long de la zone de chauffage du four, un rail 28 s'étendant sensiblement parallèlement au tube 19 et faisant office de came pour la roulette du capteur. Lorsque la roulette du capteur aborde le rail, elle se soulève et provoque la mise en communication du demi-caisson correspondant avec le tube réservoir de vide. Lorsque la roulette du capteur quitte le rail, elle s'abaisse et met le demi-caisson correspondant en communication avec l'air ambiant, provoquant le cassage du vide dans ledit demi-caisson. Le rail 28 est formé d'une pluralité d'éléments dont la hauteur est individuellement réglable de façon à pouvoir régler la longueur de la partie de la zone de chauffage où on désire appliquer un vide aux supports tulipés.

L'entraînement de la sole en rotation est assuré par un galet caoutchouté 29 de grande diamètre maintenu en contact contre le rail 17 par un vérin 30 et entraîné en rotation par un moteur électrique 31 par des courroies 32 et 33 via un réducteur 34. Un galet 35 situé en regard du galet 29 et disposé de l'autre côté de celle-ci empêche la déformation du rail 17 sous la pression exercée par le galet 29 et, donc, tout patinage intempestif.

Les supports tulipés 14 sont montés à frottement doux dans une base 36 (par exemple en acier réfractaire) supportée par les caissons de façon à pouvoir régler leur hauteur dans une certaine mesure.

La sole repose sur le bâti par l'intermédiaire de rouleaux fous 37 permettant sa rotation.

Une certaine étanchéité, destinée à éviter ou minimiser les courants d'air dans le four ainsi que l'entrée de poussières dans le four, est assurée entre la sole tournante et le bâti par des chicanes 38 et un joint 39 du type balai frottant.

La partie supérieure du four est constituée par le tunnel 4. Ce tunnel comporte une entrée 5 pourvue d'une cheminée à ouverture réglable 40, une première zone de chauffage 6 divisée, par exemple, en cinq sections Z₁, Z₂, Z₃, Z₄ et Z₅, une zone de discontinuité thermique 7, une deuxième zone de chauffage 8 divisée, par exemple, en trois sections Z₆, Z₇ et Z₈, une zone morte (sans éléments chauffants) 9, une zone de refroidissement par chemise d'air 10, et une zone de refroidissement par chemise d'eau 11. Entre la zone de refroidissement 11 et l'entrée 5, le tunnel est interrompu pour permettre le déchargement de la sole en ébauches conformées et son chargement en ébauches à traiter.

Les zones 6, 7 et 8 du tunnel comprennent des résistances chauffantes 41 (par exemple en alliage Khantal DSD disposées entre des couches d'isolation thermique 42 (par exemple constituées de panneaux de fibres céramiques isolantes) et un revêtement intérieur 43 garnissant la voute et les parois latérales du tunnel, formé par exemple, de plaques de carbure de silicium, qui permet de minimiser la pollution de l'atmosphère régnant dans le four et contribue à l'homogénéité du chauffage. Des thermocouples reliés à un système de régulation (non représentés) permettent de maintenir une température de consigne prédéterminée dans chacune des sections Z₁ à Z₈.

Les zones de refroidissement 10 et 11 mettent en jeu des chemises parcourues par de l'air forcé et de l'eau.

On indique ci-après, à titre indicatif quelques spécifications d'un four typique de l'invention :
- rayon externe : 2250 mm
- largeur de la sole : 520 mm
- nombre total de supports tulipés : 320
- diamètre d'un support tulipé : 90 mm
- nombre de supports tulipés à l'intérieur du tunnel : 290
- productivité : 1740 ébauches conformées par jour.

| Cycle thermique (durée : 4 heures) | | | |
|---|---|---|---|
| | valeur d'angle de rotation | durée de séjour, minutes | température, °C |
| entrée | 11°-25 | 7,5 | |

| 1ère zone de chauffage | | | |
|---|---|---|---|
| Z₁ | 33°75 | 22,5 | 530 |
| Z₂ | 22°50 | 15 | 700 |
| Z₃ | 22°50 | 15 | 750 |
| Z₄ | 22°50 | 15 | 730 |
| Z₅ | 22°50 | 15 | 715 |
| Discontinuité thermique | 11°25 | 7,5 | 520 |

| 2ème zone de chauffage | | | |
|---|---|---|---|
| Z₆ | 22°50 | 15 | 500 |
| Z₇ | 22°50 | 15 | 450 |
| Z₈ | 45° | 30 | 375 |
| Refroidissement | 90° | 60 | |
| Application du vide : entre le début de la zone Z₃ et la fin de la discontinuité thermique. Valeur du vide appliqué : 150 millibars absolus. | | | |

Bien entendu, le profil de température du cycle thermique, la durée du cycle thermique, ainsi que les diverses caractéristiques du four mentionnées ci-dessus ne sont que des exemples pouvant être modifiés en fonction des besoins particuliers.

Egalement, bien que le four de l'invention ait été conçu pour le traitement d'ébauches en verre, il pourrait également servir à la réalisation des moules en verre utilisés pour la fabrication de lentilles organiques.

## Revendications

1. Un four continu pour conformer à un profil voulu l'une des faces d'ébauches de lentilles optiques par affaissement thermique de ces ébauches sur des gabarits (15) convenablement profilés sous l'action concomitante d'un vide, qui comprend :
- un bâti (2) fixe,
- une sole tournante (3) de forme générale annulaire formée d'une pluralité de sections successives, chaque section étant pourvue d'une pluralité de supports (14), en forme de tulipes, destinés à supporter les gabarits,
- un tunnel fixe (4) recouvrant la sole sur une partie de sa longueur et comprenant au moins une zone de chauffage (6, 8) des ébauches à une température causant leur ramollissement et au moins une zone de refroidissement (10, 11) des ébauches conformées sur une de leurs faces, la partie de la sole non recouverte par le tunnel constituant des postes (12) de chargement du four en ébauches à conformer et de déchargement des ébauches conformées sur une de leurs faces,
- des moyens (17, 29, 31) d'entraînement de la sole en rotation,
- une source de vide (19, 22) entraînée en rotation avec la sole, et
- des moyens (13, 24-28) permettant de relier les supports tulipés d'une section de la sole à la source de vide lorsque cette section arrive en une première position prédéterminée de la zone de chauffage, puis de connecter lesdits supports tulipés à l'air ambiant lorsque ladite section arrive en une deuxième position prédéterminée de la zone de chauffage.

2. Un four selon la revendication 1, caractérisé en ce que les moyens permettant de relier les supports tulipés d'une section de la sole à la source de vide lorsque cette section arrive en une première position prédéterminée de la zone de chauffage puis de connecter lesdits supports tulipés à l'air ambiant lorsque ladite section arrive en une deuxième portion prédéterminée de la zone de chauffage comprennent un conduit muni d'un distributeur (26) permettant de mettre les supports tulipés en communication soit avec la source de vide (19, 22), soit avec l'air ambiant, des moyens (27) de commande dudit distributeur, et des moyens (28) formant came d'actionnement de ces moyens de commande, et la source de vide comprend une pompe à vide (22) et un réservoir de vide (19).

## Claims

1. A continuous furnace for shaping one of the faces of blanks of optical lenses to a desired profile by heat sagging of these blanks on suitably profiled jigs (15) with the concomitant action of a vacuum, which comprises :
- a stationary frame (2),
- a rotary hearth (3) with a generally annular shape formed from a plurality of successive sections, each section being provided with a plurality of supports (14), which are in the shape of tulips, intended to support the jigs,
- a stationary tunnel (4) which covers the hearth for a part of its length and comprises at least one zone (6, 8) for heating the blanks at a temperature which causes them to soften and at least one zone (10, 11) for cooling the blanks which have one of their faces shaped, the part of the hearth which is not covered by the tunnel forming stations (12) for loading the furnace with blanks to be shaped and for unloading the blanks which have one of their faces shaped,
- means (17, 29, 31) for driving the hearth in rotation,
- a vacuum source (19, 22) driven in rotation with the hearth, and
- means (13, 24-28) allowing the tulip-shaped supports of one section of the hearth to be connected to the vacuum source when this section attains a first predetermined position in the heating zone, and the said tulip-shaped supports then to be connected to the ambient air when the said section attains a second predetermined position in the heating zone.

2. A furnace as claimed in claim 1, characterized in that the means allowing the tulip-shaped supports of one section of the hearth to be connected to the vacuum source when this section attains a first predetermined position in the heating zone, and the said tulip-shaped supports then to be connected to the ambient air when the said section attains a second predetermined portion of the heating zone comprise a line equipped with a distributing device (26) which allows the tulip-shaped supports to be connected either to the vacuum source (19, 22) or to the ambient air, means (27) for controlling the said distributing device and means (28) which form a cam for actuating these control means; and the vacuum source comprises a vacuum pump (22) and a vacuum tank (19).

## Patentansprüche

1. Kontinuierlicher Ofen, um die eine der Flächen von optischen Linsen-Rohlingen durch thermische Senkung dieser Rohlinge auf Profilteilen (15) unter gleichzeitiger Einwirkung von Vakuum an ein gewolltes Profil anzupassen, aufweisend:
- einen festen Sockel (2),
- eine im wesentlichen ringförmige Drehplatte (3), die mit einer Mehrzahl von aufeinanderfolgenden Abschnitten ausgebildet ist, deren jeder mit einer Mehrzahl von Stützen (14) versehen ist, die in Form von Tulpen zum Abstützen der Profilteile bestimmt sind,
- einen ortsfesten Tunnel (4), der die Drehplatte über einen Teil Ihrer Längserstreckung abdeckt und wenigstens eine Zone (6, 8) zum Aufheizen der Rohlinge auf eine deren Erweichung bewirkende Temperatur und wenigstens eine Zone (10, 11) zum Abkühlen der an einer ihrer Flächen angepaßten Rohlinge aufweist, wobei der nicht durch den Tunnel abgedeckte Teil der Drehplatte mit Stationen (12) für die Beladung des Ofens mit anzupassenden Rohlingen und für die Entnahme von an einer ihrer Flächen angepaßten Rohlinge ausgebildet ist,
- Drehantriebseinrichtungen (17, 29, 31) für die Drehplatte,
- eine zusammen mit der Drehplatte gedrehte Vakuumquelle (19, 22), und
- Mittel (13, 24 - 28), die ermöglichen, die Stütz-Tulpen des einen Abschnittes des Drehtellers mit der Vakuumquelle zu verbinden, wenn dieser Abschnitt in einer ersten vorbestimmten Position der Heizzone ankommt, und sodann die Stütz-Tulpen mit der Umgebungsluft zu verbinden, wenn der entsprechende Abschnitt in einer zweiten vorbestimmten Position der Heizzone ankommt.

2. Ofen nach Anspruch 1, dadurch gekennzeichnet, daß die Mittel (13, 24 - 28), die ermöglichen, die Stütz-Tulpen des einen Abschnittes des Drehtellers mit der Vakuumquelle zu verbinden, wenn dieser Abschnitt in einer ersten vorbestimmten Position der Heizzone ankommt, und sodann die Stütz-Tulpen mit der Umgebungsluft zu verbinden, wenn der entsprechende Abschnitt in einer zweiten vorbestimmten Position der Heizzone ankommt, eine Leitung, die mit einem Verteiler (26) verbunden ist, um die Stütz-Tulpen entweder mit der Vakuumquelle (19, 22) oder der Umgebungsluft zu verbinden, Steuermittel (27) für den Verteiler und Mittel (28) aufweist, die einen Antriebsnocken für diese Steuermittel bilden und daß die Vakuumquelle eine Vakuumpumpe (22) und einen Vakuumbehälter (19) umfaßt.
